# EUROPÄISCHE PATENTANMELDUNG

(11) **EP 0 867 214 A2**
(43) Veröffentlichungstag der Anmeldung: **30.09.1998**
(21) Anmeldenummer: 98810151.5
(22) Anmeldetag: 25.02.1998
(51) Int. Cl.: B01D 19/00, C02F 1/20

(54) **Apparat zum Aufwärmen und Entgasen von Wasser**

(30) Priorität: 27.03.1997 DE 19712993
(71) Anmelder: Asea Brown Boveri AG, 5401 Baden (CH)
(72) Erfinder: Youssef, Mustafa, Dr., 8046 Zürich (CH)
(74) Vertreter: Weibel, Beat

(57) **Zusammenfassung**

Ein Apparat Aufwärmen und Entgasen von Zusatzwasser mittels Dampf in einer Kraftwerksanlage besteht in einer ersten Stufe aus einer an der Aussenwand (2) des Kondensators (1) angeordneten Mischkammer (3) in der eine Mehrzahl von Wassereinspritzmitteln (4) angeordnet sind. Eine unterhalb der Mischkammer (3) angeordnete Trennsäule (11) bildet die zweite Stufe. Zischen der Trennsäule (11) und einem unter der Trennsäule (11) angeordneten Sammelgefäss (21) ist eine Dampfeinlassöffnung (6) vorgesehen, durch die die Trennsäule (11) mit dem Innern des Kondensators 1 kommuniziert. Die Trennsäule umfasst eine Anzahl Rinnen (10), die in Fallrichtung des Zusatzwassers (8) abwechselnd an einander gegenüberliegenden Gehäusewänden (2, 17) angeordnet sind. In die Mischkammer (3) mündet eine Entlüftungsleitung (19) und das Sammelgefäss ist durch eine Wasserauslassöffnung (18) mit dem Innern des Kondensator 1 verbunden.

## Beschreibung

### TECHNISCHES GEBIET

Die vorliegende Erfindung bezieht sich auf die Aufwärmung und Entgasung von Wasser mittels Dampf in einer Kraftwerksanlage. Sie betrifft einen entsprechenden Apparat, wie er im Oberbegriff des ersten Anspruchs beschrieben ist.

### TECHNOLOGISCHER HINTERGRUND UND STAND DER TECHNIK

In modernen Kraftwerksanlagen ist der Verbrauch von Zusatzwasser sehr gross. So benötigen bereits klassische Kondensationsanlagen als Zusatzwasser normalerweise 1 bis 5% des gesamten zirkulierenden Massenstromes des Dampf-Kondensat-Kreislaufes. In Kombi-Anlagen jedoch, bei denen mit Hilfe von Dampfinjektion die Emission von Stickstoffoxyden reduziert wird, kann dieser Zusatzwasserverbrauch auf mehr als 50% ansteigen. Dabei wird infolge der heutigen Anforderungen eine Entgasungsspanne des Zusatzwassers an O₂ von 8'000 ppb (Teile pro Milliarde), - d.h. Sättigungszustand des Wassers mit der atmosphärischen Luft bei Raumtemperatur - herunter auf etwa 5 ppb bei einer gleichzeitigen Erwärmung um 20K und mehr verlangt.

### STAND DER TECHNIK

Das einfache, - an sich bekannte und bei kleinen Zusatzwassermengen von 1 bis 5% übliche - direkte Einsprühen von Zusatzwasser in den Kondensator würde aufgrund der genannten grossen Mengen zu einer Überflutung der Rohrbündel führen. Dies hätte eine schwere Beeinträchtigung der Funktion des Kondensators zur Folge und ist deswegen sowohl vom Kondensatorlieferanten als auch vom Kondensatorbetreiber nicht zugelassen. Ausserdem lässt sich auf diese Art nicht die gewünschte Aufwärmung und Entgasung erzielen. Ab einer Zusatzwassermenge von etwa 5% des gesamten Massenstromes finden übliche Apparate zur Aufwärmung und Entgasung Verwendung, die separat vom Kondensator angeordnet sind und je nach Aufbau mit Abdampf oder höherwertigerem Dampf für die Aufwärmung und Entgasung über entsprechende Leitungen versorgt werden müssen. Die Verwendung solcher Apparate ist aber erst ab einem Bedarf an Zusatzwasser von mehr als 30% des Gesamtmassenstromes sinnvoll. Bei einem Zusatzwasserbedarf zwischen 5 und 30% stellt der kostenmässige Aufwand für einen separaten Entgaser die Verwendung desselben in Frage.

Ein bekannter Apparat zum Aufwärmen und Entgasen von Zusatzwasser grosser Mengen ist beispielsweise bekannt aus der EP 0 463 448 B2.

### DARSTELLUNG DER ERFINDUNG

Unter Zugrundelegung der Erkenntnis, dass die Wärme des im Kondensator einer Stromerzeugungsanlage anfallenden Abdampfes in der Regel als unerwünschtes Abfallprodukt betrachtet wird, liegt der Erfindung die Aufgabe zugrunde, einen einfachen und preiswerten Apparat für das Aufwärmen und Entgasen von 5 bis 30 % Zusatzwasser mittels Abdampf in einer Kraftwerksanlage bereitzustellen.

Erfindungsgemäss wird diese Aufgabe durch die Merkmale des ersten Anspruchs gelöst.

Kern der Erfindung ist es, einen Apparat zum Aufwärmen und Entgasen von Zusatzwasser unmittelbar an der Seitenwand eines Kondensators anzuordnen, wobei der besagte Apparat eine Mischkammer umfasst, in welche eine Mehrzahl von Wassereinspritzmitteln über einer Trennsäule angeordnet ist und unterhalb der Trennsäule ein Sammelgefäss den Apparat abschliesst, wobei zwischen dem Sammelgefäss und Trennsäule die Gehäusewand eine Dampfeinlassöffnung aufweist, durch den Dampf aus dem Kondensator einströmt, des weiteren das Sammelgefäss über einen Wasserauslass mit dem Innern des Kondensators kommuniziert. Aus der Mischkammer ist durch eine Gasauslassöffnung, in welchem ein niedrigerer Druck als im Innern des Kondensators herrscht, das aus dem Zusatzwasser gelöste Inertgasgemisch absaugbar. Hierbei ist es von besonderem Vorteil, wenn der Gasauslass mit einem Kondensatorlüfter, einem Sauger oder einem Entlüftungskondensator in Verbindung steht.

Eine vorteilhafte Ausgestaltung der Erfindung zeichnet sich dadurch aus, dass die Trennsäule eine Anzahl Rinnen umfasst, die in Fallrichtung des aus den Wassereinspritzmitteln einströmenden Wassers abwechselnd an einander gegenüberliegenden Gehäusewänden angeordnet sind, so dass sich für das herabfallende Wasser ein mäanderförmiger Fallweg ausbildet.

Des weiteren ist von Vorteil, wenn die Rinnen durch Schikanen begrenzt sind, die abschnittsweise Öffnungen zum Abfliessen des Wassers aufweisen, wobei diese Öffnungen der Schikanen von in Fallrichtung des Wassers benachbarten Rinnen nicht oder teilweise überlappen. Durch diese Massnahme wird ein direkter Strömungsweg für den Dampf zur Mischkammer hin bereitgestellt.

Eine weitere erfindungsgemässe Ausführungsvariante zeichnet sich dadurch aus, dass die Trennsäule eine Packung aufweist, durch die das herabfallende Wasser rieselt.

Der Apparat zum Aufwärmen und Entgasen zeichnet sich dadurch aus, dass der Kraftwerk-Wirkungsgrad gesteigert wird, da zur Aufwärmung und Entgasung ausschliesslich niederwertiger Abdampf verwendet wird, was den Kondensator entlastet. Weiterhin ist von bemerkenswerter Bedeutung, dass der Apparat zum Aufwärmen und Entgasen durch die gemeinsame Gehäusewand mit dem Kondensator weder einer Leitungsverbindung für den Dampf bedarf noch für das in den Kondensator fliessende Wasser aus dem Sammelgefäss.

### KURZE BESCHREIBUNG DER ZEICHNUNG

In der Zeichnung ist anhand des kalten Endes einer Dampfturbinenanlage ein Ausführungsbeispiel der Erfindung schematisch dargestellt.

Es zeigen:
- Fig.1: einen Teilschnitt durch einen Kondensator mit integriertem Entgasungsapparat;
- Fig.2: einen Teilschnitt durch den Entgasungsapparat;

Alle für das Verständnis der Erfindung unwesentlichen Anlagenteile, wie beispielsweise der eigentliche Dampf- und Wasserkreislauf der Stromerzeugungsanlage, sind nicht dargestellt. Die Strömungsrichtungen der beteiligten Medien sind mit Pfeilen bezeichnet.

### WEG ZUR AUSFÜHRUNG DER ERFINDUNG

Obwohl Mischvorwärmer/Entgaser in Struktur und Funktion hinlänglich bekannt sind, sei deren Problematik und die hier gefundene Lösung anhand eines unverbindlichen Zahlenbeispiels erläutert:

Die Entgasung bei gleichzeitiger Aufwärmung, wie sie typischerweise in Kraftwerksanlagen auftritt, weist einige Besonderheiten auf. Zunächst verfügt man für die Aufwärmung des Zusatzwassers über gesättigten Niederdruckdampf, in der Regel Turbinenabdampf. Dieser weist eine Feuchte vom mehr als 10% auf und seine Temperatur beträgt normalerweise zwischen 20°C und 50°C. Daher ist der vom unterkühlten Zusatzwasser abgesaugte Dampfmassenstrom, der in der Regel in einen Oberflächenkondensator einströmt, hauptsächlich durch die Unterkühlung des Zusatzwassers gegeben, bezogen auf die Sättigungstemperatur des Turbinenabdampfes. Mit anderen Worten, es stellt sich im Entgaser ein natürlicher Beharrungszustand ein, der nur von den Zuständen und der Stärke der involvierten Ströme abhängt, ohne die Einwirkung eines Regelkreises zur Kontrolle der genannten Wirkgrössen.

Die Austreibung der in der Flüssigkeit gelösten Gase geschieht in einer ersten Stufe zunächst auf rein thermodynamischer Basis, da die Absenkung des Druckes durch die Versprühung und die Erhöhung der Temperatur des Zusatzwassers durch die Aufwärmung mit Dampf eine Verminderung der Sättigungswerte der gelösten Gase hervorruft (Sprudeleffekt). Dadurch übersteigt der Partialdruck der gelösten Gase den herrschenden Gesamtdruck. Bei der hier angestrebten Entgasungsspanne wird der grösste Teil des gesamthaft erforderlichen Dampfes für die Aufwärmung und Entgasung in dieser Stufe des Prozesses benötigt. Auf der Basis von einer Anfangskonzentration an O2 von 8'000 ppb bei 20°C ergibt sich bei 100 mbar und 46°C Sättigungstemperatur ein Abbau der Konzentration auf etwa 1'800 ppb, wobei jedes kg Zusatzwasser für die Aufwärmung bis auf Sättigungstemperatur bereits etwa 0.050 kg trocken gesättigten Dampf benötigt. Die Entfernung des in der Gasphase vorliegenden Sauerstoffes nach dieser ersten Stufe wird durch Ablassen des mit Inertgasen angereicherten Restdampfstromes erreicht. Hierzu wird ein Anteil des in den Entgasungsraum eingeführten und mit den ausgetriebenen Gasen angereicherten Dampfes in den Kondensatorluftkühler geleitet. Von dort wird er mittels des nicht dargestellten Absaugsystemes des Kondensators aus der Anlage heraus befördert. Im wesentlichen wird also in dieser ersten Stufe das Zusatzwasser von einem Grossteil der Gase, d.h. Sauerstoff, jedoch auch Stickstoff und Kohlendioxyd dadurch befreit, dass das Zusatzwasser einem Niederdruck ausgesetzt wird und die entsprechenden Sättigungsbedingungen annimmt.

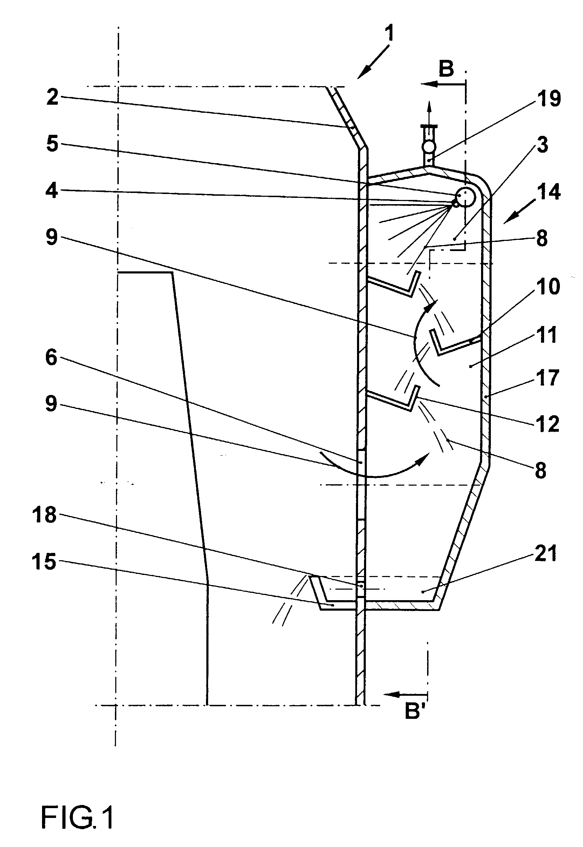

Diese erste Stufe des Aufwärmens und Entgasens von Zusatzwasser erfolgt, wie aus Fig. 1 ersichtlich, in einer sogenannten Mischkammer 3 eines Apparates, der unmittelbar an einer Gehäusewand 2 eines Kondensators 1 angeordnet ist und sich mit diesem Kondensator 1 eine gemeinsame Gehäusewand 2 teilt. In dieser Mischkammer 3 sind eine Vielzahl von Wassereinspritzmitteln in Form von Düsen 4 aufgereiht. Diese Düsen werden über eine gemeinsame Wasserleitung 5 versorgt. Über die Düsen wird das unterkühlte Zusatzwasser mit der hohen O₂-Konzentration in die Mischkammer 3 eingesprüht. Beim Eindüsen des Zusatzwassers entspannt sich dieses zunächst auf den in der Mischkammer herrschenden Kondensatordruck. Dabei erfolgt eine schlagartige Ausgasung dieses Wassers auf die obengenannte O₂-Konzentration von ca. 1'800 ppb (bei 100 mbar).

Da das Zusatzwasser beträchtlich kühler ist als die Sättigungstemperatur im Kondensator, wirkt das Zusatzwasser absaugend. In die Mischkammer strömt von unten aus einer Trennsäule 11 Dampf, der zum grössten Teil in der Mischkammer beim Kontakt mit dem Zusatzwasser 8 kondensiert. Die überschüssige Dampfmenge reichert sich während des thermischen Ausgleichsvorgans mit inerten Gasen an. Dieser angereicherte Dampf wird über eine Entlüftungsleitung 19, oberhalb des Bereiches in den Zusatzwasser 8 eingespritzt wird, abgesaugt. Hierfür ist die Entlüftungsleitung 19 entweder mit einem nicht dargestellten Kondensatorluftkühler oder direkt mit einem Sauger verbunden.

Der massgebende und schwierigere Anteil der Restentgasung geschieht in einer zweiten Stufe auf rein stoffkinetischer Basis durch diffusiven Transport der gelösten Gase über die Gas/Flüssigkeitsgrenzschicht. Dieser Transportprozess kann erst nach Erreichen eines thermischen Gleichgewichtes stattfinden. Der Arbeitsprozess dieser zweiten Stufe ist wesentlich aufwendiger als jener der ersten Stufe.

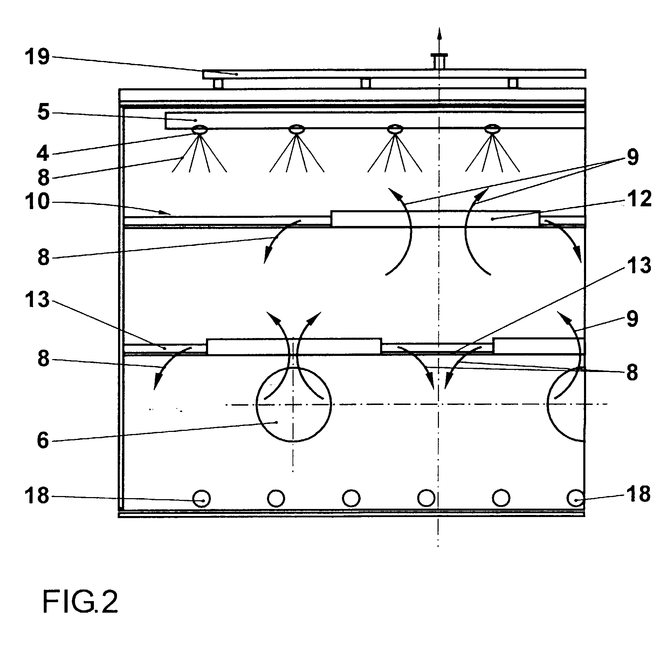

Ausgehend von einem gesättigten Zusatzwasser ist nunmehr die Verwendung eines Gas-Flüssigkeits-Kontaktapparates in Gegenstromschaltung zum Erzielen einer maximalen Trennarbeit sinnvoll. Benutzt wird eine Trennsäule 11, für deren Betrieb indes eine Mindestdampfmenge erforderlich ist. Diese Menge an sogenanntem Spüldampf beziffert sich auf ca. 10% der gesamten für die Aufwärmung benötigten Dampfmenge. Die Trennsäule 11 ist unterhalb der Mischkammer 3 abgeordnet und umfasst eine Anzahl Rinnen 10, im dargestellten Beispiel drei, die abwechselnd in Fallrichtung des aus der Mischkammer kommenden Zusatzwassers 8 an einander gegenüberliegenden Gehäusewänden 2, 17 angebracht sind. Diese Rinnen 10 sind seitlich begrenzt durch die Gehäusewände 2, 17 und durch Schikanen 12. In Verbindung mit Fig. 2 ist ersichtlich, dass die Schikanen 12 mit Öffnungen 13 versehen sind aus denen gezielt Wasser zur nächst tiefergelegenen Rinne 10 abfliessen kann. Das Zusatzwasser 8 fliesst somit mäanderförmig von der obersten Rinne 10 bis zur untersten und von dort in ein Sammelgefäss 21. Die Öffnungen 13 in den Schikanen 12 der benachbarten Rinnen 10 sind derart verteilt, dass sie einander nie vollständig überlappen. Somit wird verhindert, dass sich ein beinahe dampfdichter Wasservorhang ausbildet, der eine gewünschte direkte Dampfströmung durch die Trennsäule 11 in die Mischkammer 3 unterbinden könnte.

Mit Dampf versorgt wird der Apparat 14 zum Aufwärmen und Entgasen durch eine oder mehrere Dampfeinlassöffnungen 6 in der Gehäusewand 2 des Kondensators 1. Hierdurch saugt der Apparat niederwertigen Abdampf, beispielsweise einer nicht dargestellten Turbine an, der dann zum Aufwärmen und Entgasen von Zusatzwasser 8 Verwendung findet. Aufgewärmtes und entgastes Zusatzwasser 8 wird im Sammelgefäss 21 aufgefangen und dem Kondensator 1 und damit dem Wasserkreislauf über eine Wasserauslassöffnung 18 in der Gehäusewand 2 zugeführt.

Denkbar im Sinn der Erfindung ist auch der Einsatz eines nicht dargestellten Füllkörpers anstatt der Rinnen 10 in der Trennsäule 11. Auch eine Kombination aus einem oder mehreren Füllkörpern mit einer oder mehreren Rinnen 10 ist erfindungsgemäss denkbar. Hierbei ist zu erwähnen, dass der Füllkörper aus einer ungeordneten Schüttung aufgebaut sein kann oder durch eine reguläre Packung gebildet wird, wobei in beiden Verwendungsfällen ein Bypasskanal durch oder an der Trennsäule 11 für die bereits beschriebene direkte Dampfströmung zur Mischkammer 3 hin gewährleistet ist.

In den beschriebenen Trennsäulen 11 wird die restliche Gasmenge aus dem Wasser zum überwiegenden Teil eliminiert. Das Entfernen dieses Gas-Dampfgemisches wird ebenfalls über die Entlüftungsleitung 19 durchgeführt.

Mit dem erfindungsgemässen Apparat zum Aufwärmen und Entgasen von Zusatzwasser kann eine beträchtliche Einsparung hinsichtlich Rohrinstallation neben der ansonsten aufzuwendenden Energie für die beschriebenen Prozesse verzeichnet werden.

Denkbar im Sinne der Erfindung ist ebenfalls eine Integration des gesamten Apparates 14 zum Aufwärmen und Entgasen innerhalb des Kondensatorgehäuses. Hierbei könnte dann sogar auf ein Sammelgefäss 21 verzichtet werden.

### BEZUGSZEICHENLISTE

- 1: Kondensator
- 2: Gehäusewand
- 3: Mischkammer
- 4: Düse
- 5: Wasserleitung
- 6: Dampfeinlassöffnung
- 8: Wasser
- 9: Dampf
- 10: Rinne
- 11: Trennsäule
- 12: Schikane
- 13: Öffnung in 12
- 14: Apparat zum Aufwärmen und Entgasen
- 15: Rinne
- 17: Gehäusewand
- 18: Wasserauslassöffnung
- 19: Entlüftungsleitung
- 21: Sammelgefäss

## Patentansprüche

1. Apparat zum Aufwärmen und Entgasen von Wasser mittels Dampf in einer Kraftwerksanlage,
dadurch gekennzeichnet,
dass der Apparat mit einem Kondensator (1) mindestens eine gemeinsame Gehäusewand (2) aufweist,
dass an dieser Gehäusewand (2) eine Mischkammer (3) mit einer Mehrzahl von Wassereinspritzmittel (4) über einer Trennsäule (11) angeordnet ist,
dass unterhalb der Trennsäule (11) ein Sammelgefäss (21) den Apparat abschliesst,
dass zwischen dem Sammelgefäss (21) und der Trennsäule (11) die Gehäusewand (2) eine Dampfeinlassöffnung (6) aufweist, durch den Dampf aus dem Konndensator (1) einströmt,
dass das Sammelgefäss (21) einen Wasserauslass (18) zum Innern des Kondensators (1) aufweist,
und dass in die Mischkammer (2) eine Gasauslassöffnung (19) mündet, in welcher ein niedrigerer Druck als im Innern des Kondensators (1) herrscht.

2. Apparat nach Anspruch 1,
dadurch gekennzeichnet, dass die Entlüftungsleitung (19) mit einem Kondensatorluftkühler in Verbindung steht.

3. Apparat nach Anspruch 1,
dadurch gekennzeichnet, dass die Entlüftungsleitung (19) mit einem Sauger in Verbindung steht.

4. Apparat nach Anspruch 1,
dadurch gekennzeichnet, dass die Entlüftungsleitung (19) mit einem Entlüftungskondensator in Verbindung steht.

5. Apparat nach einem der Ansprüche 2 bis 4,
dadurch gekennzeichnet, dass die Trennsäule (11) eine Anzahl Rinnen (10) aufweist, die in Fallrichtung des aus den Wassereinspritzmitteln (4) einströmenden Zusatzwassers (8) abwechselnd an einander gegenüberliegenden Gehäusewänden (2, 17) angeordnet sind, so dass sich für das Wasser ein mäanderförmiger Fallweg ausbildet.

6. Apparat nach Anspruch 5,
dadurch gekennzeichnet, dass die Rinnen (10) durch Schikanen (12) begrenzt sind, die abschnittsweise Öffnungen (13) zum Abfliessen des Wassers aufweisen.

7. Apparat nach Anspruch 6,
dadurch gekennzeichnet, dass die Öffnungen (13) der Schikanen (12) von in Fallrichtung des Wassers benachbarten Rinnen (10) sich nicht oder teilweise überlappen.

8. Apparat nach einem der Ansprüche 2 bis 4,
dadurch gekennzeichnet, dass die Trennsäule (11) einen Füllkörper aufweist, durch den das einströmende Zusatzwasser (8) rieselt.

9. Apparat nach Anspruch 8,
dadurch gekennzeichnet, dass in dem Füllkörper eine Anzahl Strömungskanäle ausschliesslich für die Dampfströmung gegen die Fallrichtung des Wassers vorgesehen sind.
